Europäisches Patentamt

European Patent Office

Office européen des brevets

(19)

(11) Publication number: **0 074 100**
**A1**

## (12) EUROPEAN PATENT APPLICATION

(21) Application number: **82108153.6**

(22) Date of filing: **03.09.82**

(51) Int. Cl.³: **B 01 D 53/34**

(30) Priority: **04.09.81 US 299327**

(43) Date of publication of application:
**16.03.83 Bulletin 83/11**

(84) Designated Contracting States:
**BE DE FR GB NL**

(71) Applicant: **UNION CARBIDE CORPORATION**
**Old Ridgebury Road**
**Danbury Connecticut 06817(US)**

(72) Inventor: **Berglund, Ronald Lee**
**209 Lakeview Drive**
**Saint Albans West Virginia 25177(US)**

(74) Representative: **Wuesthoff, Franz, Dr.-Ing. et al,**
**Patentanwälte Wuesthoff -v. Pechmann-Behrens-Goetz**
**Schweigerstrasse 2**
**D-8000 München 90(DE)**

(54) Biochemically enhanced absorption system for volatile organic materials.

(57) Waste activated sludge has been used as a reactive absorbent for volatile organic compounds from waste gas streams. Specific compounds include ethyl acrylate, vinyl acetate, acrylonitrile, acetonitrile, ethylene oxide, butyraldehyde and propionaldehyde.

EP 0 074 100 A1

Croydon Printing Company Ltd.

## BACKGROUND OF THE INVENTION

This invention pertains to the absorption of volatile organic compounds from waste gas streams and more particularly to the use of waste activated sludge as a biomass to effect this absorption.

Because of the increasing public awareness of an emphasis on the fate and effects of specific organic materials or priority pollutants by regulatory agencies, increasing concern is being directed at the fate of specific organic materials discharged to the atmosphere from a process unit. Present source treatment or pretreatment control measures to remove such organic materials are uneconomical or ineffective and, in many cases, create secondary disposal problems.

It is therefore an object of this invention to provide means for biochemically enhanced absorption of volatile organic materials from waste gas streams.

Other objects will become apparent to those skilled in the art upon a further reading of the specification.

## SUMMARY OF THE INVENTION

An improved method of biochemically removing volatile organic compounds from a dilute waste gas stream has been developed which comprises contacting said gas stream with waste activated sludge until at least part of the volatile organic compounds which are absorbed are bioconverted, wherein said waste activated sludge is a biomass containing miscellaneous microorganisms and bacteria.

The waste activated sludge used in the present invention was obtained from either the South Charleston, West Virginia or Institute, West Virginia Biological Waste Treatment Plants. However, any waste activated sludge can be used. Although it was not analyzed for its biological population, it is known that many types of microorganisms are active in the breakdown of organic matter and stabilization of organic wastes and the term "Waste Activated Sludge" is regularly used in the scientific literature. For example, W. W. Eckenfelder et al. in their text, "Biological Waste Treatment" (Pergamon Press, 1961) note that:

> "In most activated sludge processes, the sludge appears as zoogleal masses intermixed with filamentous bacteria. One of the principal forms in the zoogleal mass is ZOOGLEA RAMIGERA which has been defined as a gram-negative, non-spore forming, motile, capsulated rod . . . Other common forms of bacteria in activated sludge include FLAVOBACTERIUM PSUEDOMONAS, and filamentous organisms, the most common of which is SPHAEROTILUS NATONS (page 34)."

The authors also note that, "The average moisture content of bacteria is between about 73 and 88 percent by weight and are represented by a general formula of $C_7H_{11}NO_3$ for bacteria from industrial wastes.

Time is not narrowly critical and depends upon the concentration of volatile organic compounds

- 4 -

in the waste gas streams as well as the degree of removal desired. Absorption and conversion of the volatile organic organics begins almost immediately, and can be maintained for over 40-200 hours of continuous operation. However, for some organics (e.g., ethylene oxide), for percent removal of 99 percent or greater usually an acclimation time period of ·· 40 hours is used.

Pressure is not narrowly critical but for economic purposes atmospheric pressures are generally used although superatmospheric as well as subatmospheric pressures can also be used if desired.

The classes of volatile organic compounds which can be removed from waste gases by the instantaneous invention are not limited to any particular groups but it is preferred to use this method for the removal of aldehydes, esters both saturated and unsaturated, epoxides and nitriles. The claimed method has been found to be particularly useful for removing butyraldehyde, propionaldehyde, ethyl acrylate, ethyl acetate, vinyl acetate, acetonitrile, acrylonitrile and ethylene oxide.

All tests were conducted in a bubble apparatus consisting of a cylindrical container filled with water (control) or waste activated sludge at a concentration preferably of ≈ 10,000 milligrams per liter through which a gas stream such as air or nitrogen or both containing various concentrations of volatile organic compounds is bubbled using a suitable

- 5 -

sparging means. At very short contact times the volatile organics are absorbed into the aqueous microorganism mixture and the process of biological degradation or transformation ensued due to the enzymatic action of the biomass. The "biological degradation" of the volatile organic compounds can include three types of biological reductions, viz., "primary degradation" which is the biodegradation to the minimum extent necessary to change the identity of the organic compound; "ultimate biodegradation" which is the biodegradation (biooxidation) to water, carbon dioxide and any inorganic compounds; and "acceptable biodegradation" which is the biodegradation necessary to remove some undesirable properties of the parent compound, such as, odor, toxicity, and olfactory or skin irritation .

In the present process of this invention, the system can be operated to optimize the "primary biodegradation" stage, in which a volatile (less soluble) organic compound when contacted with the biomass is rapidly bioconverted to a less-volatile (more soluble) byproduct. Through this conversion, the concentration of the volatile organic compound being removed from the waste gas stream does not buildup in the liquid containing the waste activated sludge, a maximum driving force of the gas is maintained, absorption is enhanced and the capacity of the system to treat the volatile organic compounds in the waste gas is greatly increased. If the liquid biomass system becomes saturated with

- 6 -

the degradation product, it can easily be removed from the system for separate additional treatment, regeneration or disposal.

The present process is useful under both aerobic as well as anaerobic conditions. The choice of one or the other of these conditions depends as will be appreciated by one skilled in the art by the nature of the volatile organic compound being treated. For example if ethyl acrylate is being removed under anaerobic conditions ethanol is the bioconversion product and eventually will remain in the effluent gas if the waste sludge is not removed and treated separately. However, under aerobic conditions the ethanol will be degraded as well.

The term aerobic is also used in this invention when the biomass was maintained with oxygen addition prior to carrying out the treatment of the volatile organic compounds as well as to describe the bioabsorption system treating a gas stream containing oxygen. The phrase anaerobic is used to describe the condition when the biomass was left for the lengthly period of time with no oxygen in contact with it, as well as to describe the bioabsorption system treating the pollutants in a nitrogen or other oxygen-free gas stream.

It is postulated that the degradation system is enzymatic as a hypothesized mechanism but the invention is not limited to this theoretical aspect.

The feed rate at which the waste gas stream containing the organic volatile compound is bubbled or

- 7 -

sparged through the waste activated sludge dispersion in water is not narrowly critical and can be readily ascertained by those skilled in the art as determined by the material being treated and the geometrics of the treating system. No special apparatus is required other than that which is available commercially in this field.

The percent of the volatile organic materials removed or converted is also controllable by the operator by varying the length of contact time, the efficiency of the contact between the waste gas stream and the activated sludge and other geometric factors.

While temperatures in the range of 15°C to 30°C is preferred, temperatures in the range of 5°C to . 50°C can also be used.

The term volatile organic compounds encompasses a wide variety of known materials used in the chemical industry. Exemplary compounds include cyano containing hydrocarbons, such as, acrylonitrile, methacrylonitrile, acetonitrile and the like; alkyl acrylates or methacrylates having up to 8 carbon atoms in the alkyl moiety, such as, methyl methacrylate, ethyl acrylate, propyl acrylate, butyl acrylate, and the like; lower alkyl esters of fatty acids having up to about 4 carbon atoms in either the alkyl or acid moieties, such as, methyl formate, ethyl acetate, ethyl propionate, methyl butyrate, and the like, 1,2-alkylene oxides having 2 to 4 carbon atoms in the alkylene moiety, such as,

- 8 -

ethylene oxide, 1,2-propylene oxide, 1,2-butylene oxide, and the like; as well as fatty acid aldehydes having up to 5 carbon atoms, such as, formaldehyde, acetaldehyde, propionaldehyde, n-butyraldehyde, and pentaldehyde.

The concentration of volatile organic compounds in the waste gas stream is not critical but is preferably in the range of 100 to 20,000 parts per million (ppm) although the concentration of volatile organic compounds can be as low as 10 parts per million and as high as 100,000 parts per million.

The invention is further described in the examples which follow. All parts and percentages are by volume unless otherwise specified.

## Examples 1-5

The following examples demonstrate a simple batchwise contacting of a quantity of a volatile organic material with activated sludge either under aerobic or anaerobic conditions to demonstrate the removal of the volatile organic compounds by the waste activated sludge.

One hundred (100) milligrams of ethyl acrylate per liter of water was added to 300 milligrams of waste activated sludge per liter of water in a suitable container. The concentration of the ethyl acrylate measured against time indicated a rapid disappearance after contacting the biomass which could be

- 9 -

maintained under aerobic or anaerobic conditions. The disappearance of the ethyl acrylate generally followed first order kinetics according to the equation below:

$$\frac{C \ (time \ t)}{C \ (initial)} = exp(-K_R t)$$

C (time t) = concentration of chemical at time t

C (initial) = initial concentration

$K_R$ = removal rate constant $Hr^{-1}$

t = contact time in hours.

This experiment was repeated with ethyl acetate, butyraldehyde, acrylonitrile, and ethylene oxide at concentrations of 100 to 200 milligrams per liter of water with waste activated sludge ranging from 300 to 2,000 milligrams per liter of water. The applicable data for all of above-described experiments is delineated in Table I below.

TABLE I

| Chemical | Removal Rate Constant $Hr^{-1}$ | | Bio-Removal After Contact Time | | |
|---|---|---|---|---|---|
| | Mean | Range | 30 mins. | 1 hr. | 2 hrs. |
| Ethyl Acrylate | 6 | (3-15) | 95 | 99.7 | 100 |
| Ethyl Acetate | 6 | (0.5-8) | 95 | 99.7 | 100 |
| Butyraldehyde | 6 | (4-8) | 95 | 99.7 | 100 |
| Acrylonitrile | 10 | (5-30) | 99 | 99.995 | 100 |
| Ethylene Oxide | 0.9 | | 36 | 60 | 84 |

- 10 -

## Examples 6-9

## BUBBLE CONTACT ABSORPTION

Using the bubble apparatus referred to earlier the container was filled with 800 ml of water or waste activated sludge at a concentration of 10,000 milligrams per liter of water and then a sample of nitrogen containing 1,000 parts per million of acrylonitrile, acetonitrile, ethyl acrylate, and ethylene oxide, respectively, were bubbled through the waste activated sludge. Feed rate data, percent removal, operating time hours and other data are recorded in Table II.

# TABLE II

| Chemical | Concentration ppm | Feed Rate Liter Gas/min Liter Liquid | Removal % | Operating Time Hrs. | Other |
|---|---|---|---|---|---|
| Acrylonitrile | 1,000 | 0.13 | 99.98 | 100 | |
| Acetonitrile | 1,000 | 0.13 | 99.98 | 40 | 40 ppm Acetic Acid in Gas |
| Ethyl Acrylate | 1,000 | 0.75 | 100 | 40 | Aerobic* |
| Ethylene Oxide | 1,000 | 0.18 | 99.98 | 200 | |
| Propionaldehyde | 1,000 | 0.38 | >99.9 | 40 | |
| Butyraldehyde | 1,000 | 0.18 | 99.7 | 40 | |
| Vinyl Acetate | 1,000 | 0.38 | >99.9 | 40 | |
| Vinyl Acetate | 2,000 | 0.25 | >99.9 | 40 | |
| Vinyl Acetate | 5,000 | 0.13 | 99.8 | 40 | |

------------------

*Under anaerobic conditions ethyl acrylate was removed, but ethanol (the bio-conversion product) was eventually present in effluent gas. Under aerobic conditions ethanol was degraded.

- 12 -

## Example 10

### ABSORPTION OF ACRYLONITRILE

In order to determine the absorption capacity of water for acrylonitrile, an air stream containing 1000 ppm of acrylonitrile was bubbled through the absorption apparatus described previously. Gas and liquid samples were taken and analyzed by gas phase chromatography at regular intervals until approximately 50 percent saturation to determine the equilibrium relationship between the acrylonitrile and exit gas was achieved. Acrylonitrile has a solubility in water of approximately 71,000 mg per liter at 20°C. With a vapor pressure of 84 millimeters at 20°C, its Henry's constant in water is approximately 1.5 ppm in air/mg/l in water. The exit gas concentrations and liquid concentrations taken from consecutive samples from the absorption apparatus indicate that the acrylonitrile in the exit gas was essentially in equilibrium with the acrylonitrile in the water. The calculated Henry's constant for acrylonitrile in water fits the experimental data quite well.

The results for the two absorption tests with water indicate that the system achieves 50 percent breakthrough after 28 hours at a gas flow rate of 100 cc/min or after 14 hours at a gas flow rate of 200 cc/min. The mass transfer coefficients, $K_1a$ for acrylonitrile are equal to 0.023 $hr^{-1}$, at 100 cc/min and 0.046 $hr^{-1}$ at 200 cc/min.

- 13 -

Seven tests were conducted to evaluate the removal of acrylonitrile from a gas stream using 800 ml of aerobic biomass as the absorbent. These included the conditions shown below.

### TABLE III

| Test No. | Feed Rate cc/min | Feed Conc. ppm | Acrylonitrile Load mg moles/hr |
|---|---|---|---|
| 1 | 50 | 2000 | 0.27 |
| 2 | 50 | 4000 | 0.54 |
| 3 | 100 | 1000 | 0.27 |
| 4 | 100 | 2000 | 0.54 |
| 5 | 200 | 1000 | 0.54 |
| 6 | 200 | 2000 | 1.08 |
| 7 | 300 | 2000 | 1.62 |

The operating time of these tests varied from six hours for Test No. 7 to over 100 hours for Test No. 3. Some of the systems had not reached equilibrium when they were terminated. Nevertheless, the results of these tests shown in Table 3 indicate that under all conditions, the biomass enhance the removal capabilities of the system.

The greatest removal increase occurred at the lowest acrylonitrile loadings. When 1000 ppm of acrylonitrile was bubbled into the system at a gas/liquid rate of 0.125 liters/min/liters, (0.34 mg moles/liter/hour), the effluent gas contained less than

- 14 -

0.2 ppm of acrylonitrile for better than 100 hours. In the system using water alone, this concentration was exceeded after only one minute of operation. This represents a removal of 99.98 percent of the acrylonitrile. As the acrylonitrile loading on the system increased, however, the percentile removal achieved by the biomass decreased. The percentage increase due to bioconversion at the two highest loadings (108 and 162 mg moles/hr), were 15 percent and 23 percent, respectively.

It is significant to note that when the feed gas flow rate was discontinued, the biosystem continued to remove the absorbed acrylonitrile in the solution at the previous rate. The indicates that in a continuous system when the absorbent is placed in a reservoir it will reactivate itself.

The concentration of activated waste sludge is not narrowly critical. However it is preferred to employ a concentration of 5000 to 15000 milligrams of suspended solids per liter of water.

## Examples 11-15

Additional bioabsorption tests were carried out with propionaldehyde, butyraldehyde and vinyl acetate in air at three concentrations. The data obtained are presented in Table IV.

## TABLE IV

### Additional "Bioabsorption" Tests

#### Propionaldehyde

Feed Conc.  1,000 ppm in Air

| Gas Flow Rate | cc/Min | 300 | 600 | 600* |
|---|---|---|---|---|
| Outlet Conc. | ppm | <1 | 9 | 30 |
| Removal | % | >99.9 | 99.1 | 97 |

#### Butyraldehyde

Feed Conc.  1,000 ppm in Air

| Gas Flow Rate | cc/Min | 150 |
|---|---|---|
| Outlet Conc. | ppm | 3 |
| Removal | % | 99.7 |

#### Vinyl Acetate

Feed Conc.  1,000 ppm in Air

| Gas Flow Rate | cc/Min | 100 | 200 | 300 |
|---|---|---|---|---|
| Outlet Conc. | ppm | <1 | <1 | <1 |
| Removal | % | >99.9 | >99.9 | >99.9 |

Feed Conc.  2,000 ppm in Air

| Gas Flow Rate | cc/Min | 100 | 200 | 300 | 400 |
|---|---|---|---|---|---|
| Outlet Conc. | ppm | <1 | <1 | 5 | 480 |
| Removal | % | >99.95 | >99.95 | 99.75 | 76 |

Feed Conc.  5,000 ppm in Air

| Gas Flow Rate | cc/Min | 50 | 100 | 150 | 200 |
|---|---|---|---|---|---|
| Outlet Conc. | ppm | 2.5 | 11 | 360 | 1,000 |
| Removal | % | 99.95 | 99.8 | 93 | 80 |
| Also in Outlet = Ethanol, ppm | | ~2 | ~90 | ~600 | ~900 |

* - All liquid volumes  ~800 cc, except this test =  ~600 cc.

## WHAT IS CLAIMED IS:

1. Method of biochemically removing volatile organic compounds from a dilute waste gas stream which comprises contacting said gas stream with waste activated sludge until at least part of the volatile organic compounds are absorbed and "bioconverted" to primary biodegradation products, wherein said waste activated sludge is a biomass containing miscellaneous miscroorganisms and bacteria.

2. Method claimed in claim 1 wherein the volatile organic compound in the waste gas stream is acrylonitrile or acetonitrile or an alkyl acrylate, preferably ethyl acrylate, or a 1,2-alkylene oxide, preferably ethylene oxide, or a fatty acid aldehyde having up to 5 carbon atoms, preferably n-butyraldehyde.

3. Method claimed in claim 1 or 2 wherein the temperature is in the range of 5 to 50 °C.

4. Method claimed in claim 1 to 3 wherein the gas conditions are aerobic or anaerobic.

5. Method claimed in claim 1 to 4 wherein the concentration of volatile organic compounds in the waste gas stream is 10 to 100,000 parts per million of gas.

6.    Method claimed in claim 1 to 5 wherein ·the concentration of waste activated sludge in water is 5000 to 15000 milligrams per liter of water.

8146

**0074100**

European Patent
Office

**EUROPEAN SEARCH REPORT**

Application number

EP 82 10 8153.6

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| X | US - A - 3 828 525 (W.M. COPA et al.)<br>* claims 1, 2; column 1, lines 14 to 20; lines 55 to 64; column 2, lines 25 to 29; example 3 * | 1-6 | B 01 D 53/34 |
| A | DE - A1 - 2 442 524 (DART INDUSTRIES INC.)<br>* claims 1, 7 to 9 *<br>& GB - A - 1 461 865 | 1,3,4 | |

**TECHNICAL FIELDS SEARCHED (Int.Cl. ³)**

B 01 D 53/00
C 02 F 3/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 29-10-1982 | BERTRAM |

EPO Form 1503.1   06.78